# EUROPÄISCHE PATENTSCHRIFT

(11) **EP 0 859 687 B1**
(45) Veröffentlichungstag und Bekanntmachung des Hinweises auf die Patenterteilung: **29.09.1999**
(21) Anmeldenummer: 96937280.4
(22) Anmeldetag: 29.10.1996
(51) Int. Cl.: B23P 19/02, F22B 37/00, G21F 9/30

(54) **VERFAHREN UND VORRICHTUNG ZUM ENTSORGEN EINES RADIOAKTIV KONTAMINIERTEN DAMPFERZEUGERS**
METHOD AND DEVICE FOR DISPOSING OF A RADIOACTIVELY CONTAMINATED STEAM GENERATOR
PROCEDE ET DISPOSITIF POUR LA MISE AU REBUT D'UN GENERATEUR DE VAPEUR CONTAMINE PAR RADIOACTIVITE

(30) Priorität: 07.11.1995 DE 19541501
(43) Veröffentlichungstag der Anmeldung: 26.08.1998
(73) Patentinhaber: SIEMENS AKTIENGESELLSCHAFT, 80333 München (DE)
(72) Erfinder: KUNZ, Rainer, D-90427 Nürnberg (DE); OPERSCHALL, Hermann, D-91207 Lauf (DE)
(86) Internationale Anmeldenummer: EP9604694
(87) Internationale Veröffentlichungsnummer: WO9717168

(56) Entgegenhaltungen:
- EP-A- 0 168 698
- EP-A- 0 204 889
- GB-A- 2 113 598
- US-A- 4 406 856
- US-A- 5 138 754

## Beschreibung

Die Erfindung bezieht sich auf ein Verfahren und eine Vorrichtung zum Entsorgen eines radioaktiv kontaminierten Dampferzeugers, der eine Vielzahl von in einen Rohrboden mündenden U-förmig gebogenen Heizrohren enthält.

In einer Reihe von Kernkraftwerken wurden in der Vergangenheit radioaktiv kontaminierte Dampferzeuger ausgetauscht. In weiteren Kernkraftwerken sind solche Austauschaktionen geplant oder in Vorbereitung. Die stillgelegten radioaktiv kontaminierten Dampferzeuger liegen in den Kernkraftwerken bereit und müssen zu ihrer Entsorgung zerkleinert werden, um in entsprechenden Gebinden transportiert und gelagert werden zu können. Diese radioaktiv kontaminierten Dampferzeuger enthalten mehrere tausend, beispielsweise ca. 4000, U-förmig gebogene Heizrohre, die zum Entsorgen des gesamten Dampferzeugers ebenfalls zerlegt und ausgebaut werden müssen. Bei solchen Entsorgungsmaßnahmen muß eine übermäßige Dosisbelastung des Arbeitspersonals sowie eine Verschleppung der Kontamination weitgehend vermieden werden.

Aus der europäischen Offenlegungsschrift EP 0 555 127 A1 ist es bekannt, stillgelegte radioaktiv kontaminierte Dampferzeuger für die Zwecke der Lagerung, Reparatur oder Entsorgung chemisch zu dekontaminieren, um die von ihnen ausgehende Dosisbelastung zu reduzieren.

Der Erfindung liegt nun die Aufgabe zugrunde, ein Verfahren zum Entsorgen eines radioaktiv kontaminierten Dampferzeugers anzugeben, das einen einfachen Ausbau der Heizrohre mit möglichst geringer Dosisbelastung des Arbeitspersonals ermöglicht und mit dem ein möglichst geringes Risiko einer Kontaminationsverschleppung einhergeht. Außerdem soll eine Vorrichtung zur Durchführung des Verfahrens angegeben werden.

Die erstgenannte Aufgabe wird gemäß der Erfindung gelöst durch ein Verfahren mit den Merkmalen des Patentanspruches 1.

Die zweitgenannte Aufgabe wird gemäß der Erfindung gelöst durch eine Vorrichtung mit den Merkmalen des Patentanspruchs 10.

Das Verfahren zum Entsorgen eines radioaktiv kontaminierten Dampferzeugers, der eine Vielzahl von in einen Rohrboden mündenden U-förmig gebogenen Heizrohren enthält, umfaßt gemäß der Erfindung folgende Arbeitsschritte:
a) Abtrennen der Heizrohre über dem Rohrboden des Dampferzeugers,
b) Herstellen einer Öffnung im Mantel des Dampferzeugers durch Abtrennen und Entfernen eines oberen Teils seines Doms,
c) Aufnehmen eines Heizrohrs am Rohrbogen,
d) Ziehen des Heizrohres durch die Öffnung mittels einer Zieheinrichtung.

Da zum Ausbau der Heizrohre der Dampferzeuger nur im Bereich des Domes geöffnet wird, wird durch den Mantel des Dampferzeugers ein erheblicher Teil der von den Heizrohren ausgehenden radioaktiven Strahlung abgeschirmt, so daß die Dosisbelastung des Personals erheblich verringert ist.

Insbesondere werden gemäß dem Verfahren nach Patentanspruch 2 die Heizrohre zum Vorformen und zum Verringern ihres Rohrbogenradius mit der Zieheinrichtung durch eine Walzeinrichtung gezogen und anschließend in eine Preßeinrichtung zum Flachpressen eingeführt. Durch das Zusammenführen der beiden Schenkel des Heizrohres beim Walzen und Flachpressen wird der Platzbedarf für das ausgebaute Heizrohr außerhalb des Dampferzeugers reduziert, so daß das Heizrohr einfach transportiert und gelagert werden kann. Auch dies trägt zur Verringerung der Dosisbelastung des Personals bei. Durch das Flachpressen der Heizrohre wird auch deren Volumen verringert. Dies ermöglicht deren kostengünstigen Transport in ein Endlager sowie deren wirtschaftliche Einlagerung.

In einer vorteilhaften Weiterbildung der Erfindung werden die Zieheinrichtung, die Walzeinrichtung und die Preßeinrichtung innerhalb des Doms angeordnet. Auf diese Weise wird der Mantel des Damferzeugers wirkungsvoll als Abschirmung während des Zerlegevorganges ausgenutzt.

In einer vorteilhaften Ausgestaltung der Erfindung ist an der Preßeinrichtung die Zieheinrichtung angeordnet, die das Heizrohr in einem ersten Arbeitsschritt bei ruhender Preßeinrichtung durch die Walzeinrichtung zieht, und bei dem in einem zweiten Arbeitsschritt die Preßeinrichtung relativ zur Walzeinrichtung verfahren wird und das Heizrohr durch die Walzeinrichtung nachzieht.

Vorzugsweise wird das vorgeformte Heizrohr in die Preßeinrichtung durch ein Bewegen der Preßeinrichtung in Richtung zur Walzeinrichtung eingeführt und durch Schließen der Preßeinrichtung zusammengepreßt.

Insbesondere wird die geschlossene Preßeinrichtung mit dem gepreßten Heizrohr von der Walzeinrichtung wegbewegt, zieht dabei das Heizrohr einen vorgegebenen Weg durch die Walzeinrichtung, wird anschließend im geöffneten Zustand bei ruhendem Heizrohr erneut zur Walzeinrichtung bewegt und danach geschlossen und erneut wegbewegt, so daß das Heizrohr schrittweise aus dem Dampferzeuger gezogen und abschnittsweise gepreßt wird.

Insbesondere wird das flachgepreßten Heizrohr in Abschnitte mit vorgegebener Länge zerlegt. Durch diese Maßnahme ist ein einfacher Transport der zerlegten Heizrohre in kleinen und leicht abschirmbaren Behältern möglich.

Vorzugsweise wird der flachgepreßte Teil des Heizrohres nach dem Zurückfahren der Preßeinrichtung abgeschnitten. Dadurch werden der Platzbedarf beim gesamten Verfahren verringert und zusätzliche dosisbelastende und kontaminationsverschleppende Arbeitsschritte, die bei einem nachträglichen Zerlegen des Heizrohres erforderlich wären, vermieden.

Die Vorrichtung nach der Erfindung enthält
a) eine Abtrenneinrichtung zum Abtrennen eines Heizrohres über einem Rohrboden eines Dampferzeugers, der eine Vielzahl von in den Rohrboden mündende U-förmige Heizrohre enthält,
b) eine Aufnahmeeinrichtung zum Aufnehmen des Heizrohres am Rohrbogen,
c) eine Zieheinrichtung zum Ziehen des Heizrohres durch eine Öffnung im Mantel des Dampferzeugers und durch eine der Zieheinrichtung zugeordnete Walzeinrichtung zum Vorformen und Verringern des Rohrbogenradius, sowie
d) einer Preßeinrichtung zum Flachpressen des vorgeformten Heizrohres.

Die Vorrichtung gemäß der Erfindung ermöglicht einen weitgehend automatisierten Verfahrensablauf. Dadurch wird die Dosisbelastung des Personals minimiert.

Vorzugsweise ist eine relativ zur Walzeinrichtung bewegbare Preßeinrichtung vorgesehen, auf der eine erste Zieheinrichtung gelagert ist. Beispielsweise ist auf der von der Walzeinrichtung abgewandten Seite an der Preßeinrichtung eine Schneideinrichtung zum Zerschneiden der flachgepreßten Heizrohre angeordnet.

Zur weiteren Erläuterung der Erfindung wird auf die Ausführungsbeispiele der Zeichnung verwiesen. Es zeigen:
**Figur 1** ein radioaktiv kontaminierter Dampferzeuger mit einem in Arbeitsposition angeordneten Ausführungsbeispiel einer Vorrichtung gemäß der Erfindung in einem Längsschnitt veranschaulicht ist. In
**Figuren 2 bis 7** ist ein weiteres Ausführungsbeispiel einer Vorrichtung gemäß der Erfindung jeweils in unterschiedlichen Arbeitspositionen in einer Seitenansicht dargestellt.
**Figuren 8 und 9** veranschaulichen jeweils in einer perspektivischen Darstellung ein Heizrohr vor bzw. nach dem Flachpressen. In
**Figur 10** ist die Packungsdichte gemäß der Erfindung flachgepreßter Heizrohre in einem Behälter in einer perspektivischen Ansicht veranschaulicht.

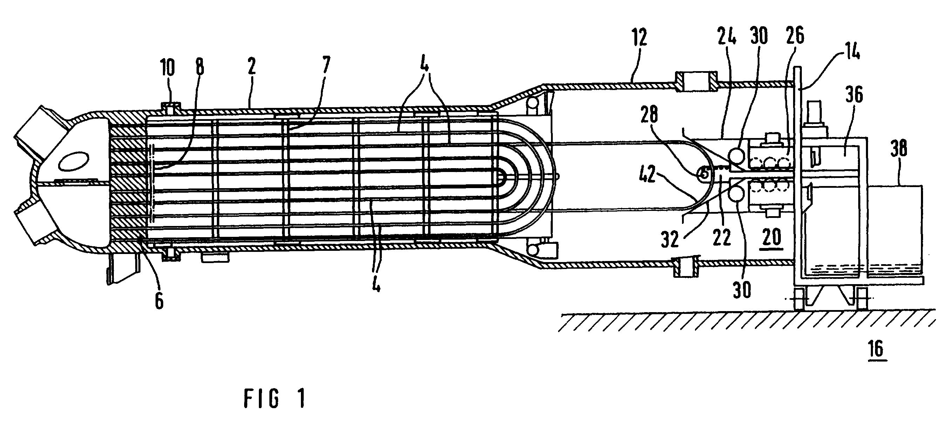

Gemäß **Figur 1** enthält ein stillgelegter, waagrecht gelagerter Dampferzeuger 2 etwa 4000 U-förmig gebogene Heizrohre 4 mit einer Gesamtlänge von etwa 40000 m. Die U-förmigen Heizrohre 4 sind mit den freien Enden ihrer Schenkel in einen Rohrboden 6 eingewalzt und eingeschweißt und werden zusätzlich durch Abstandsgitter 7 gehaltert.

Die Heizrohre 4 werden knapp über dem Rohrboden 6 entlang einer strichpunktiert veranschaulichten Trennfläche 8 mit einer durch eine Montageöffnung 10 einführbaren Vorrichtung abgetrennt.

Im Mantel des Dampferzeugers 2 ist bereits in einem vorangegangenen Arbeitschritt durch Abtrennen und Entfernen des oberen Teiles seines Domes 12 eine Öffnung hergestellt worden und in den verbleibenden Teil des Doms 12 ist eine Vorrichtung 20 gemäß der Erfindung eingeführt. Die Vorrichtung 20 ist an einer Montageplatte 14 eines fahrbaren L-förmigen Gestells 16 montiert. Die Montageplatte 14 dient zugleich zur Abschirmung des geöffneten Dampferzeugers 2.

An der Montageplatte 14 ist eine Zieheinrichtung 22, eine Walzeinrichtung 24 und eine Preßeinrichtung 26 angeordnet. Die Zieheinrichtung 22 umfaßt einen hydraulisch verriegelbaren Mitnehmerkeil 28, der ein Heizrohr 4 im Scheitelpunkt seines Bogens 42 hintergreift und eine kraftschlüssige Verbindung zwischen der Zieheinrichtung 22 und dem Heizrohr 4 herstellt. Die Zieheinrichtung 22 zieht das Heizrohr 4 durch ein voneinander beabstandetes Rollenpaar 30, das den Radius des Bogens 42 verringert und ein Einführen des Rohres 4 in die Preßeinrichtung 26 ermöglicht. In der Preßeinrichtung 26 wird nach Entriegeln des Mitnehmerkeils 28 das Heizrohr 4 stückweise flachgepreßt und durch die Montageplatte 14 hindurch im flachgepreßten Zustand über den Behälter 38 geführt und durch eine Schneideinrichtung 36 abgetrennt, so daß es in den Behälter 38 fällt. Um ein Verkippen des Heizrohres 4 beim Einführen in die Walzeinrichtung 24 zu verhindern, sind an der Walzeinrichtung 24 Führungsbleche 32 angeordnet.

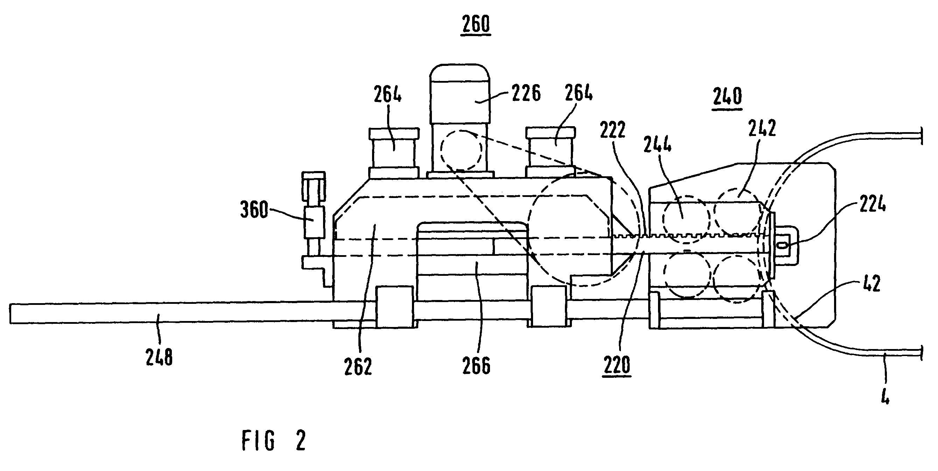

In einer vorteilhaften Ausgestaltung der Erfindung gemäß **Figur 2** ist eine Walzeinrichtung 240 vorgesehen, die zwei hintereinander angeordnete walzrollenpaare 242 und 244 enthält. Der Abstand der Walzrollen eines Walzrollenpaares 242 oder 244 verringert sich dabei in Ziehrichtung, so daß ein knickfreies Vorformen des Heizrohres 4 möglich ist. Der Abstand der Walzrollen eines Walzrollenpaares 242 und 244 ist dabei wenigstens so groß, daß der am Scheitelpunkt des Bogens 42 eingehakte Mitnehmerkeil 224 durch die Walzrollen hindurchgeführt werden kann. Die Walzrollen weisen vorzugsweise eine quer zur Laufrichtung gekrümmte Walzfläche auf, die an den Radius des Heizrohres 4 angepaßt ist.

Die Walzeinrichtung 240 ist an den freien Enden zweier Führungsstangen 248 fixiert, die an der in dieser Figur nicht sichtbaren Montageplatte 14 angeordnet sind. Von den beiden Führungsstangen 248 ist in der Figur ebenfalls nur eine sichtbar.

Auf den Führungsstangen 248 ist verschiebbar eine Preßeinrichtung 260 gelagert, die eine erste Zieheinrichtung 220 trägt. Die Zieheinrichtung 220 umfaßt eine Zahnstange 222, die an ihrem freien Ende den arretierbaren Mitnehmerkeil 224 trägt. Die Zahnstange 222 wird über ein in der Figur nicht sichtbares Ritzel betätigt, das von einem an der Preßeinrichtung angeordneten Elektromotor 226 angetrieben wird.

Die Preßeinrichtung 260 umfaßt einen gestrichelt eingezeichneten Preßbalken 262, der mittels zweier Hydraulikzylinder 264 gegen eine feststehende Platte 266 gedrückt werden kann. Am von der Walzeinrichtung 240 abgewandten Ende der Preßeinrichtung 260 ist eine Schneideinrichtung 360 angeordnet, mit der das in der Preßeinrichtung 260 flachgepreßte Heizrohr 4 abgeschert werden kann.

In der Figur ist die Einrichtung in einer Arbeitsposition dargestellt, bei der das noch nicht verformte Heizrohr 4 bis an das erste Walzrollen-Paar 242 der Walzeinrichtung 240 herangeführt ist.

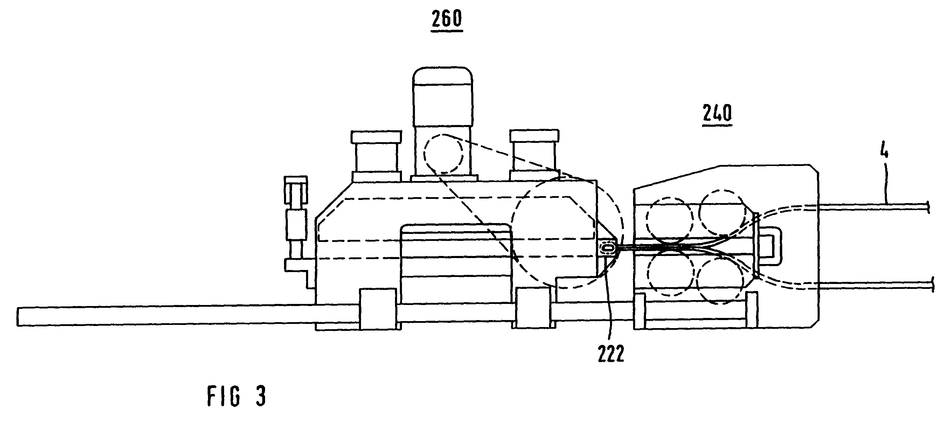

In **Figur 3** ist eine Arbeitsposition dargestellt, bei der die Ziehstange 222 das Heizrohr 4 bis zur Preßeinrichtung 260 durch die Walzeinrichtung 240 gezogen hat.

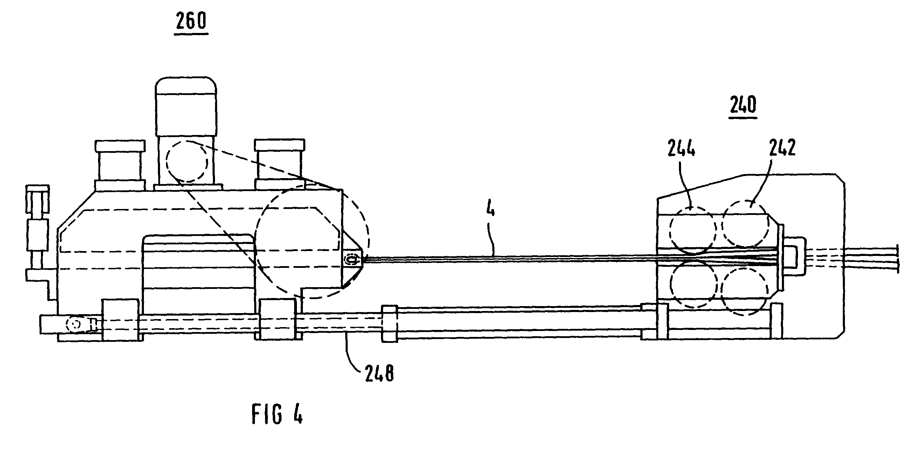

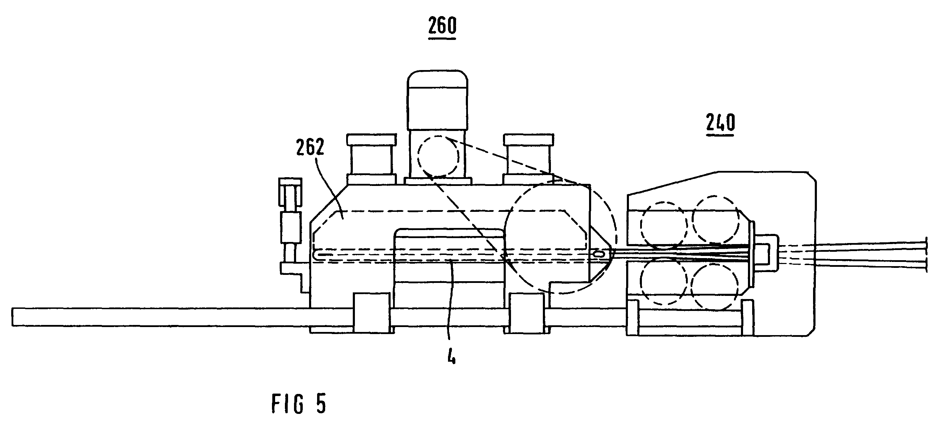

Gemäß **Figur 4** wird in einem darauf folgenden Arbeitsschritt die gesamte Preßeinrichtung 260 bei arretierter Ziehstange entlang der Führungsstangen 248 relativ zur Walzeinrichtung 240 bewegt, so daß das Heizrohr 4 weiter durch die Walzeinrichtung 240 gezogen und vorgeformt wird. Zwischen der Preßeinrichtung 260 und der Walzeinrichtung 240 befindet sich dann ein vorgeformtes Rohrstück, bei dem die beiden Schenkel des Heizrohres 4 bereits weitgehend aneinandergelegt sind und entsprechend der Krümmung der Walzflächen der Walzrollen 242 und 244 eine Ovalität aufweisen. In einem nächsten Arbeitsschritt wird dann der Mitnehmerkeil 224 entkuppelt und gemäß **Figur 5** die Preßeinrichtung 260 in ihre Ausgangsposition zurück zur Walzeinrichtung 240 gefahren, so daß sich das vorgeformte Rohr innerhalb der Preßeinrichtung 260 befindet. Daraufhin wird der Preßbalken 262 hydraulisch betätigt und das Heizrohr 4 flachgedrückt.

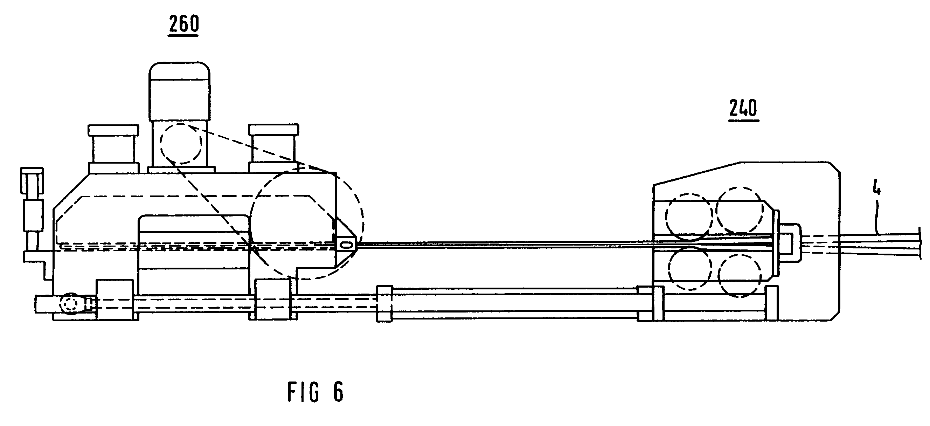

Unter Aufrechterhaltung der Preßspannung wird dann gemäß **Figur 6** die Preßeinrichtung 260 erneut von der Walzeinrichtung 240 weggefahren und zieht auf diese Weise das Heizrohr 4 entsprechend dem Fahrweg der Preßeinrichtung 260 weiter durch die Walzeinrichtung 240.

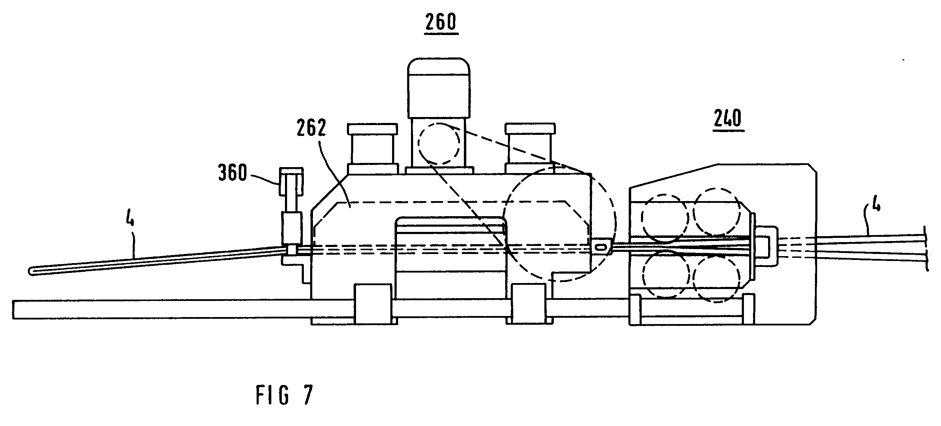

Der Preßbalken 262 wird zurückgefahren, so daß das Heizrohr 4 freigegeben wird und die gesamte Preßeinrichtung 260 wird gemäß **Figur 7** erneut in die Ausgangsposition an der Walzeinrichtung 240 zurückgefahren, so daß sich ein vorgeformtes, jedoch noch nicht gepreßtes Teil des Heizrohres 4 innerhalb der Preßeinrichtung 260 befindet. Auf dem von der Walzeinrichtung abgewandten Ende der Preßeinrichtung 260 steht das flachgedrückte Teil des Heizrohres 4 über, das dann in erneut zurückgefahrener Position mittels der Schnedeinrichtung 360 abgeschert werden kann.

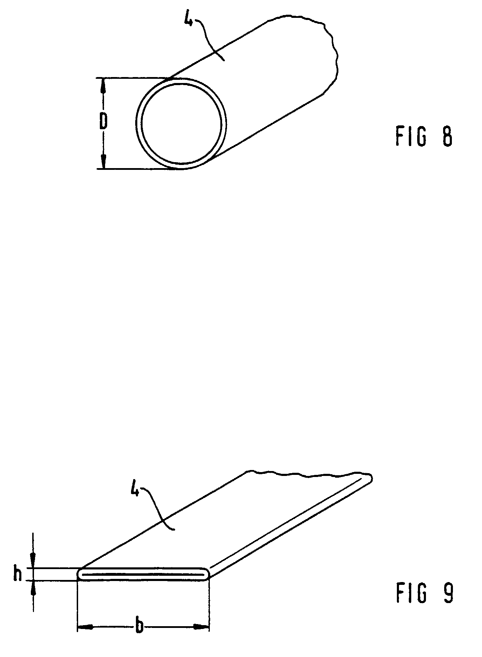

In **Figuren 8 und 9** ist die mit dem Flachpressen einhergehende Volumenverringerung des Heizrohres 4 zu erkennen. Ein rundes Heizrohr 4 mit einem Außendurchmesser d ≈ 22 mm wird zu einem flachen Heizrohr 4 mit annähernd rechteckigem Querschnitt mit einer Höhe h ≈ 3 mm und einer Breite b ≈ 35 mm gequetscht. Auf diese Weise kann eine Volumenreduktion auf ein fünftel erreicht werden. Dies ermöglicht einen kostengünstigen Transport zum nuklearen Endlager und eine wirtschaftliche Einlagerung.

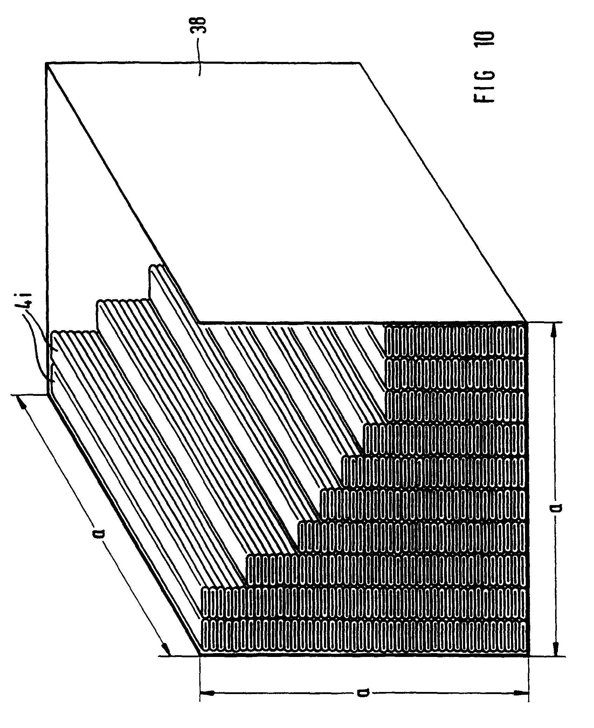

In **Figur 10** ist veranschaulicht, daß ein kubischer Behälter 38 der Kantenlänge a ≈ 1000 mm nahezu 9000 auf in Teilstücke 4i von 1 m Länge geschnittene, flachgepreßte Heizrohre aufnehmen kann, so daß das gesamte Rohrbündel eines radioaktiv kontaminierten Dampferzeugers mit vier bis fünf Behältern 38, die jeweils ein Volumen von nur 1 m³ haben, entsorgt werden kann.

## Patentansprüche

1. Verfahren zum Entsorgen eines radioaktiv kontaminierten Dampferzeugers (2), der eine Vielzahl von in einen Rohrboden (6) mündenden U-förmig gebogenen Heizrohren (4) enthält, umfassend folgende Arbeitsschritte:
a) Abtrennen der Heizrohre (4) über dem Rohrboden (6) des Dampferzeugers (2),
b) Herstellen einer Öffnung im Mantel des Dampferzeugers (2) durch Abtrennen und Entfernen eines oberen Teiles seines Doms (12),
c) Aufnehmen eines Heizrohrs (4) am Rohrbogen,
d) Ziehen des Heizrohres (4) durch die Öffnung mittels einer Zieheinrichtung (22; 220).

2. Verfahren nach Anspruch 1, bei dem
d1) das Ziehen des Heizrohres (4) mit der Zieheinrichtung (22; 220) durch eine Walzeinrichtung (24; 240) zum Vorformen des Heizrohres (4) und Verringern seines Rohrbogenradius erfolgt und
e) das vorgeformte Heizrohr (4) in eine Preßeinrichtung (26;260) zum Flachpressen eingeführt wird.

3. Verfahren nach Anspruch 2, bei dem die Zieheinrichtung (22;220), die Walzeinrichtung (24;240) und die Preßeinrichtung (26;260) innerhalb des Doms (12) angeordnet werden.

4. Verfahren nach Anspruch 2 oder 3, bei dem das Heizrohr (4) schrittweise aus dem Dampferzeuger (2) gezogen und abschnittsweise gepreßt wird.

5. Verfahren nach einem der Ansprüche 2 bis 4, bei dem an der Preßeinrichtung (260) die Zieheinrichtung (220) angeordnet ist, die das Heizrohr (4) in einem ersten Arbeitsschritt bei ruhender Preßeinrichtung (260) durch die Walzeinrichtung (240) zieht, und bei dem in einem zweiten Arbeitsschritt die Preßeinrichtung (260) relativ zur Walzeinrichtung (240) verfahren wird und das Heizrohr (4) durch die Walzeinrichtung (240) nachzieht.

6. Verfahren nach Anspruch 5, bei dem das vorgeformte Heizrohr (4) in die Preßeinrichtung (260) durch ein Bewegen der Preßeinrichtung (260) in Richtung zur Walzeinrichtung (240) eingeführt und durch Schließen der Preßeinrichtung (240) zusammengepreßt wird.

7. Verfahren nach Anspruch 6, bei dem die geschlossene Preßeinrichtung (260) mit dem gepreßten Heizrohr (4) von der Walzeinrichtung (240) wegbewegt wird und dabei das Heizrohr (4) einen vorgegebenen Weg durch die Walzeinrichtung (240) zieht, anschließend geöffnet wird und in geöffnetem Zustand bei ruhendem Heizrohr (4) erneut zur Walzeinrichtung (240) bewegt wird und danach geschlossen und erneut wegbewegt wird, so daß das Heizrohr(4) schrittweise aus dem Dampferzeuger gezogen und abschnittsweise gepreßt wird.

8. Verfahren nach einem der Ansprüche 2 bis 7, bei dem das flachgepreßte Heizrohr (4) in Teilstücke (4i) mit vorgegebener Länge zerlegt wird.

9. Verfahren nach Anspruch 8 in Verbindung mit Anspruch 7, bei dem der flachgepreßte Teil des Heizrohres (4) nach dem Zurückfahren der Preßeinrichtung (260) abgeschnitten wird.

10. Vorrichtung zum Durchführen des Verfahrens nach Anspruch 2, mit
a) einer Abtrenneinrichtung zum Abtrennen eines Heizrohres (4) über einem Rohrboden (6) eines Dampferzeugers (2), der eine Vielzahl von in den Rohrboden (6) mündende U-förmige Heizrohre (4) enthält,
b) einer Aufnahmeeinrichtung (28, 224) zum Aufnehmen des Heizrohres (4) am Rohrbogen,
c) einer Zieheinrichtung (22, 220) zum Ziehen des Heizrohres (4) durch eine Öffnung im Mantel des Dampferzeugers (2) und durch eine der Zieheinrichtung (22, 220) zugeordneten Walzeinrichtung (24, 240) zum Vorformen und Verringern des Rohrbogenradius, sowie
d) einer Preßeinrichtung (26, 260) zum Flachpressen des vorgeformten Heizrohres (4).

11. Vorrichtung nach Anspruch 10, mit einer relativ zur Walzeinrichtung (240) bewegbaren Preßeinrichtung (260), auf der die Zieheinrichtung (220) gelagert ist.

12. Vorrichtung nach Anspruch 11, mit einer auf der von der Walzeinrichtung (240) abgewandten Seite an der Preßeinrichtung (260) angeordneter Schneideinrichtung (360) zum Schneiden des Heizrohrs (4).

## Claims

1. Method for disposing of the waste of a radioactively contaminated steam generator (2) which contains a plurality of heating tubes (4) which are bent in a U-shape and open into a tube base (6), the method comprising the following operating steps:
a) severing of the heating tubes (4) over the tube base (6) of the steam generator (2),
b) making an opening in the casing of the steam generator (2) by severing and removing an upper part of its dome (12),
c) taking up a heating tube (4) on the tube bend,
d) drawing the heating tube (4) through the opening by means of a drawing device (22; 220).

2. Method according to claim 1, where
d1) the drawing of the heating tube (4) with the drawing device (22; 220) takes place by means of a rolling device (24;240) for preforming the heating tube (4) and reducing its tube bend radius and
e) the preformed heating tube (4) is introduced into a pressing device (26;260) to be pressed flat.

3. Method according to claim 2, where the drawing device (22;220), the rolling device (24;240) and the pressing device (26;260) are arranged within the dome (12).

4. Method according to claim 2 or 3, where the heating tube (4) is gradually pulled out of the steam generator (2) and is pressed in sections.

5. Method according to one of claims 2 to 4, where the drawing device (220) is arranged at the pressing device (260), which drawing device, in a first operating step, draws the heating tube (4) through the rolling device (240) when the pressing device (260) is stationary, and where, in a second operating step, the pressing device (260) is moved relative to the rolling device (240) and drags the heating tube (4) through the rolling device (240).

6. Method according to claim 5, where the preformed heating tube (4) is introduced into the pressing device (260) by way of a movement of the pressing device (260) in the direction of the rolling device (240) and is compressed when the pressing device (260) is closed.

7. Method according to claim 6, where the closed pressing device (260) with the pressed heating tube (4) is moved away from the rolling device (240) and in the process draws the heating tube (4) through the rolling device (240) for a specified distance, is subsequently opened and in the opened state with stationary heating tube (4) is moved once again to the rolling device (240) and is thereafter closed and moved away once again, so that the heating tube (4) is gradually drawn out of the steam generator and is pressed in sections.

8. Method according to one of claims 2 to 7, where the flat-pressed heating tube (4) is separated into sections (4i) of specified length.

9. Method according to claim 8 in connection with claim 7, where the flat-pressed part of the heating tube (4) is cut off after the pressing device (260) has travelled back.

10. Device for carrying out the method according to claim 2, with
a) a severing device for severing a heating tube (4) over a tube base (6) of a steam generator (2), which contains a plurality of U-shaped heating tubes (4) opening into the tube base (6),
b) a taking-up device (28, 224) for taking up the heating tube (4) at the tube bend,
c) a drawing device (22, 220) for drawing the heating tube (4) through an opening in the casing of the steam generator (2) and through a rolling device (24, 240), allocated to the drawing device (22, 220), for preforming and reducing the tube bend radius, as well as
d) a pressing device (26, 260) for pressing the preformed heating tube (4) flat.

11. Device according to claim 10, with a pressing device (260) movable relative to the rolling device (240), on which pressing device the drawing device (220) is mounted.

12. Device according to claim 11, with a cutting device (360) arranged on the pressing device (260) on the side directed away from the rolling device (240) for cutting the heating tube (4).

## Revendications

1. Procédé pour la mise au rebut d'un générateur (2) de vapeur contaminé par radioactivité, qui contient une pluralité de tubes (4) de chauffage coudés en U et débouchant dans une plaque (6) tubulaire, comprenant les étapes suivantes :
a) détachement des tubes (4) de chauffage au-dessus de la plaque (6) tubulaire du générateur (2) de vapeur,
b) réalisation d'une ouverture dans l'enveloppe du générateur (2) de vapeur, par détachement et dépose d'une partie supérieure de son dôme (12),
c) prise en charge d'un tube (4) de chauffage par le coude du tube,
d) traction du tube (4) de chauffage par l'ouverture au moyen d'un dispositif (22 ; 220) de traction.

2. Procédé suivant la revendication 1, suivant lequel
d1) la traction du tube (4) de chauffage par le dispositif (22 ; 220) de traction s'effectue dans un dispositif (24; 240) de laminage pour préformer le tube (4) de chauffage et diminuer le rayon de son coude, et
e) le tube (4) de chauffage préformé est introduit dans un dispositif (26 ; 260) de compression pour le comprimer à plat.

3. Procédé suivant la revendication 2, suivant lequel le dispositif (22 ; 220) de traction, le dispositif (24 ; 240) de laminage et le dispositif (26 ; 260) de compression sont disposés à l'intérieur du dôme (12).

4. Procédé suivant la revendication 2 ou 3, suivant lequel le tube (4) de chauffage est tiré pas à pas hors du générateur (2) de vapeur et comprimé portion par portion.

5. Procédé suivant l'une des revendications 2 à 4, suivant lequel le dispositif (220) de traction est disposé sur le dispositif (260) de compression et, au cours d'une première étape, tire le tube (4) de chauffage dans le dispositif (240) de laminage tandis que le dispositif (260) de compression est immobile, et suivant lequel, au cours d'une deuxième étape, le dispositif (260) de compression est déplacé par rapport au dispositif (240) de laminage et tire à nouveau le tube (4) de chauffage dans le dispositif (240) de laminage.

6. Procédé suivant la revendication 5, suivant lequel le tube (4) de chauffage préformé est introduit dans le dispositif (260) de compression par un déplacement du dispositif (260) de compression en direction du dispositif (240) de laminage, et est comprimé par fermeture du dispositif (260) de compression.

7. Procédé suivant la revendication 6, suivant lequel le dispositif (260) de compression fermé avec le tube (4) de chauffage comprimé, est éloigné du dispositif (240) de laminage et tire alors le tube (4) de chauffage d'une distance prescrite dans le dispositif (240) de laminage, puis est ouvert et, étant ouvert et le tube (4) de chauffage étant immobile, est déplacé à nouveau vers le dispositif (240) de laminage, puis est fermé et à nouveau éloigné, de sorte que le tube (4) de chauffage est tiré pas à pas hors du générateur de vapeur et comprimé portion par portion.

8. Procédé suivant l'une des revendications 2 à 7, suivant lequel le tube (4) de chauffage comprimé à plat est fractionné en tronçons (4i) de longueur prescrite.

9. Procédé suivant la revendication 8 conjointement avec la revendication 7, suivant lequel la partie comprimée à plat du tube (4) de chauffage est sectionnée après le retour en arrière du dispositif (260) de compression.

10. Dispositif pour la mise en oeuvre du procédé suivant la revendication 1, comportant
a) un dispositif de détachement pour détacher un tube (4) de chauffage au-dessus de la plaque (6) tubulaire du générateur (2) de vapeur, qui contient une pluralité de tubes (4) de chauffage en U qui débouchent dans la plaque (6) tubulaire,
b) un dispositif (28, 244) de prise en charge pour prendre en charge le tube (4) de chauffage par le coude du tube,
c) un dispositif (22 ; 220) de traction pour tirer le tube (4) de chauffage dans une ouverture de l'enveloppe du générateur (2) de vapeur, et un dispositif (24 ; 240) de laminage associé au dispositif (22 ; 220) de traction pour préformer le tube et diminuer le rayon de son coude,
d) ainsi qu'un dispositif (26 ; 260) de compression pour comprimer à plat le tube (4) de chauffage préformé.

11. Dispositif suivant la revendication 10, comportant un dispositif (260) de compression, qui peut être déplacé par rapport au dispositif (240) de laminage et sur lequel est monté le dispositif (220) de traction.

12. Dispositif suivant la revendication 11, comportant un dispositif (360) de coupe disposé du côté du dispositif (260) de compression, qui est opposé au dispositif (240) de laminage, pour couper le tube (4) de chauffage.
